# EUROPEAN PATENT SPECIFICATION

(11) **EP 3 545 720 B1**
(45) Date of publication and mention of the grant of the patent: **14.06.2023**
(21) Application number: 18735918.7
(22) Date of filing: 04.01.2018
(51) Int. Cl.: H04L 5/00, H04W 72/12, H04W 72/04

(54) **METHOD AND DEVICE FOR TRANSMITTING DOWNLINK CONTROL INFORMATION**
VERFAHREN UND SYSTEM ZUR ÜBERTRAGUNG VON DOWNLINK-STEUERUNGSINFORMATIONEN
PROCÉDÉ ET DISPOSITIF DE TRANSMISSION D'INFORMATIONS DE COMMANDE DE LIAISON DESCENDANTE

(30) Priority: 05.01.2017 WO PCT/CN2017/070306
(43) Date of publication of application: 02.10.2019
(73) Proprietor: Telefonaktiebolaget LM Ericsson (publ), 164 83 Stockholm (SE)
(72) Inventor: LIU, Jinhua, Beijing 100102 (CN); LI, Shaohua, Beijing 100102 (CN); ZHANG, Zhan, Beijing 100102 (CN)
(74) Representative: Ericsson
(86) International application number: PCT/CN2018/071392
(87) International publication number: WO 2018/127097

(56) References cited:
- CN-A- 102 573 094
- CN-A- 102 573 094
- CN-A- 105 578 608
- CN-A- 105 979 597
- US-A1- 2015 131 579
- HUAWEI: "Email discussion [86b-23] on multi-steps DL control channel design", 3GPP DRAFT; R1-1611656 EMAIL DISCUSSION 86B-23 ON MULTI-STEPS DL CONTROL CHANNEL DESIGN_V3, 3RD GENERATION PARTNERSHIP PROJECT (3GPP), MOBILE COMPETENCE CENTRE ; 650, ROUTE DES LUCIOLES ; F-06921 SOPH , vol. RAN WG1, no. Reno, USA; 20161114 - 20161118 14 November 2016 (2016-11-14), XP051190942, Retrieved from the Internet: URL:http://www.3gpp.org/ftp/tsg_ran/WG1_RL 1/TSGR1_87/Docs/ [retrieved on 2016-11-14]
- "3 Generation Partnership Project; Technical Specification Group Radio Access Network; Evolved Universal Terrestrial Radio Access (E-UTRA); Physical layer procedures (Release 14)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V14.1.0, 2 January 2017 (2017-01-02), pages 352-402, XP051230348, [retrieved on 2017-01-02]
- HUAWEI: 'Email discussion [86b-23] on multi-steps DL control channel design' 3GPP TSG RAN WGI MEETING #87 R1-1611656, [Online] 18 November 2016, XP051190942 Retrieved from the Internet: <URL:http://www.3gpp.org/ftp/tsg_ran/WG1_RL 1/TSGR1_87/Docs/>
- ERICSSON: 'Search space and DCI design for multicast for FeMTC' 3GPP TSG-RAN WG1 MEETING #87 R1-1611101, [Online] 18 November 2016, XP051189688 Retrieved from the Internet: <URL:http://www.3gpp.org/ftp/tsg_ran/WG1_RL 1/TSGR1_87/Docs/>
- ALCATEL -LUCENT ET AL.: 'Further discussions on DCI overhead reduction for carrier aggregation' 3GPP TSG RAN WGI MEETING #66BIS RL-113309 14 October 2011, XP050538582

## Description

### TECHNICAL FIELD

Embodiments of the present disclosure generally relate to the field of communications, and more particularly, to a method and device for transmitting downlink control information.

### BACKGROUND

With the development of communication technologies, multiple types of services or traffic have been proposed, for example, enhanced mobile broadband (eMBB) generally requiring high data rate, massive machine type communication (mMTC) typically requiring long battery lifetime, and ultra-reliable and low latency communication (URLLC). These services require different levels of Quality of Service (QoS), for instance, a delay, a data rate, a packet loss rate, and so on.

In a 5G system, also referred to as the New Radio (NR), Downlink Control Information (DCI) is used to indicate information to assist downlink data reception at a terminal device, for example user equipment (UE). The information carried by the DCI generally includes, for example, modulation and coding schemes (MCSs), Redundancy Version indicator (RVI), resource allocation, a Hybrid Automatic Repeat reQuest (HARQ) process identification, and so on. DCI transmission targets a lower Block Error Ratio (BLER) than the corresponding data transmission. The motivation is to notify a UE the corresponding data reception via a high reliable DCI so that the possible waste due to the misdetection of the DCI can be avoided.

Compared to the eMBB, the data packets for some URLLC traffic and mMTC traffic are much smaller in statistics. The generated load of high reliable DCI transmission for such traffic with a small packet would take a large portion of the total system load. Therefore, there is a need to solve the DCI overhead problem, especially for URLLC or mMTC traffic.

Document "Email discussion [86b-23] on multi-steps DL control channel design", Huawei, 3GPP document, R1-1611656, discloses an evaluation on two (or multi) steps DL control channels. The following proposals and observations were made. Proposal 1: NR supports DCI transmission in a single step at least for common control signaling. Continue discussion on other use cases which may rely on single-step DCI for UE-specific control signaling. Observation 1: A number of use cases have been identified where two (or multiple) steps DCI transmission could have benefits over single-step DCI. Benefits were also seen in terms of forward compability. Proposal 2: Continue discussion on use cases and trade-offs of two (or multiple) steps DCI transmission. Proposal 3: Continue discussion on the DCI content split between the two (or multiple) steps DCI transmissions. Proposal 4: Continue discussion on the 3 alternatives for the transmission resource of the second step DCI. Alt1: In a later control OFDM symbol (including the case with a split control OFDM symbol); Altia: same PRB as first step DCI (for UE-specific control subband and front-loaded DMRS); Altlb: same or different control subband (for common control subbands); Alt2: In the PDSCH region (where the resource of PDSCH region is indicated in the first step DCI); Alt2a: some default/implicit rule used to identify the REs carrying the second step DCI; Alt2b: blind detection within a resource indicated by the first step DCI; Alt3: In each candidate mini-slot resource at a pre-determined location within a resource indicated by the first step DCI (which could be transmitted in a group-based manner). Proposal 5: Continue discussion on the 2 alternatives for the transmission schemes of the two-step DCI: same robust transmission scheme for first step and second step DCI transmission, e.g. transmit diversity or single beam transmission, both located in DL control region and sharing demodulation RS; different transmission schemes for first step and second step DCI transmission, the first step relies on e.g. transmit diversity or single wide beam transmission, while the second scheme relies on narrow beamforming and shares DMRS with PDSCH in data region.

Document 3GPP TS 36.213 V14.1.0 provides a specification of the characteristics of the physicals layer procedures in the FDD and TDD modes of E-UTRA.

Document CN 102 573 094 A discloses a method and apparatus for transmitting DCI. According to the method, the E-PDCCH resources in the PDSCH area are divided into two types of E-PDCCH candidates, a first type of E- PDCCH candidate is used to transmit terminal-specific DCI to the terminal, and a second type of E-PDCCH candidate is used to transmit terminal-specific DCI to the terminal. The PDCCH transmits common DCI to at least one terminal.

Document US 2015/131579 A1 discloses methods for a base station to transmit and for a User Equipment (UE) to receive repetitions of an enhanced physical downlink control channel (EPDCCH). Time and frequency resources for EPDCCH repetitions are defined together with restrictions in time resources to provide UE power savings. Time and frequency resources are also defined for repetitions of a physical downlink shared channel (PDSCH) transmission and for repetitions of a physical uplink shared channel (PUSCH) transmission. Methods are also provided for the UE to transmit and for the base station to receive acknowledgement information in repetitions of a physical uplink shared channel (PUCCH).

### SUMMARY

In general, embodiments of the present disclosure provide a solution for transmitting downlink control information.

According to the present disclosure, methods, a computer-readable medium, a network device and a terminal device according to the independent claims are provided. Developments are set forth in the dependent claims.

In a first aspect, a method implemented at a network device is provided. A network device determines downlink control information, DCI, for instructing a first terminal device to perform blind detection of data transmitted on a resource region allocated to the first terminal device.

The downlink control information includes a plurality of candidate resource sets for data transmission to the terminal device.

The network device transmits the downlink control information to the terminal device. The network device indicates a subset of the plurality of candidate resource sets to the first terminal device.The subset is information for enabling the terminal device to perform detection of the data based on the subset of the plurality of candidate resource sets. Indicating the subset of the plurality of candidate resource sets comprises: determining a further DCI for instructing the terminal device to perform detection of the data transmitted on the resource region, the further DCI indicating the subset of the plurality of candidate resource sets; and transmitting the further DCI to the terminal device.

The corresponding computer program is also provided.

The dependent claims 2 to 7 provide various embodiments.

In a second aspect, a method implemented at a first terminal device is provided. The terminal device receives downlink control information associated with a resource region from a network device. The downlink control information includes a plurality of candidate resource sets for data transmission to the first terminal device. The first terminal device receiving an indication associated with a subset of the plurality of candidate resources. Receiving the indication comprises: receiving further DCI associated with the resource region, the DCI indicating a subset of the plurality of candidate resource sets for the data transmission to the terminal device; and performing blind detection of data transmitted on the resource region based on the DCI. Said performing comprises: performing blind detection of the data transmitted on the resource region based on the further DCI.

The corresponding computer program is also provided.

Claims 9 to 12 define various embodiments.

In a third aspect, a network device is provided as defined in claim 14.

In a fourth aspect, a terminal device is provided as defined in claim 15. According to various embodiments of the present disclosure, the network device may transmit the downlink control information less frequently than the data transmission. For example, the downlink control information may be transmitted only once before the data transmission, or transmitted in a predetermined larger period than the data transmission. Upon receipt of the downlink control information, the terminal device may perform blind detection of data based thereon. As a result, the overhead for transmitting the downlink control information can be largely reduced.

### BRIEF DESCRIPTION OF THE DRAWINGS

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 shows a schematic diagram 100 of a wireless communication network;
FIG. 2 shows a flowchart of a method 200 of transmitting downlink control information in accordance with an embodiment of the present disclosure;
FIG. 3 shows a flowchart of a method 300 of transmitting data in accordance with an embodiment of the present disclosure;
FIG. 4A shows a diagram 400 of a resource region in accordance with an embodiment of the present disclosure;
FIG. 4B shows a diagram 450 of resource sets in accordance with an embodiment of the present disclosure;
FIG. 5 shows a diagram 500 of a resource region in accordance with another embodiment of the present disclosure;
FIG. 6A shows a diagram 600 of a resource region in accordance with still another embodiment of the present disclosure;
FIG. 6B shows a diagram 650 of resource sets in accordance with an embodiment of the present disclosure;
FIG. 7 shows a flowchart of a method 700 of receiving downlink control information in accordance with an embodiment of the present disclosure;
FIG. 8 shows a block diagram of an apparatus 800 implemented at a network device in accordance with an embodiment of the present disclosure;
FIG. 9 shows a block diagram of an apparatus 900 implemented at a terminal device in accordance with an embodiment of the present disclosure; and
FIG. 10 shows a simplified block diagram 1000 of a device that is suitable for use in implementing embodiments of the present disclosure.

### DETAILED DESCRIPTION

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the term "wireless communication network" refers to a network following any suitable communication standards, such as LTE-Advanced (LTE-A), LTE, Wideband Code Division Multiple Access (WCDMA), High-Speed Packet Access (HSPA), and so on. Furthermore, the communications between a terminal device and a network device in the wireless communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future.

The term "network device" refers to a device in a wireless communication network via which a terminal device accesses the network and receives services therefrom. The network device refers a base station (BS), an access point (AP), a Mobile Management Entity (MME), Multi-cell/Multicast Coordination Entity (MCE), a gateway, a server, a controller or any other suitable device in the wireless communication network. The BS may be, for example, a node B (NodeB or NB), an evolved NodeB (eNodeB or eNB), a Remote Radio Unit (RRU), a radio header (RH), a remote radio head (RRH), a relay, a low power node such as a femto, a pico, and so forth.

Yet further examples of network device include multi-standard radio (MSR) radio equipment such as MSR BSs, network controllers such as radio network controllers (RNCs) or base station controllers (BSCs), base transceiver stations (BTSs), transmission points, transmission nodes, Multi-cell/multicast Coordination Entities (MCEs), core network nodes (e.g., MSCs, MMEs), O&M nodes, OSS nodes, SON nodes, positioning nodes (e.g., E-SMLCs), and/or MDTs. More generally, however, network device may represent any suitable device (or group of devices) capable, configured, arranged, and/or operable to enable and/or provide a terminal device access to the wireless communication network or to provide some service to a terminal device that has accessed the wireless communication network.

The term "terminal device" refers to any end device that can access a wireless communication network and receive services therefrom. By way of example and not limitation, the terminal device refers to a mobile terminal, UE, or other suitable device. The UE may be, for example, a Subscriber Station (SS), a Portable Subscriber Station, a Mobile Station (MS), or an Access Terminal (AT). The terminal device may include, but not limited to, portable computers, image capture terminal devices such as digital cameras, gaming terminal devices, music storage and playback appliances, a mobile phone, a cellular phone, a smart phone, a tablet, a wearable device, a personal digital assistant (PDA), a vehicle, and the like.

The terminal device may support device-to-device (D2D) communication, for example by implementing a 3GPP standard for sidelink communication, and may in this case be referred to as a D2D communication device.

As yet another specific example, in an Internet of Things (IOT) scenario, a terminal device may represent a machine or other device that performs monitoring and/or measurements, and transmits the results of such monitoring and/or measurements to another terminal device and/or a network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment that is capable of monitoring and/or reporting on its operational status or other functions associated with its operation.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

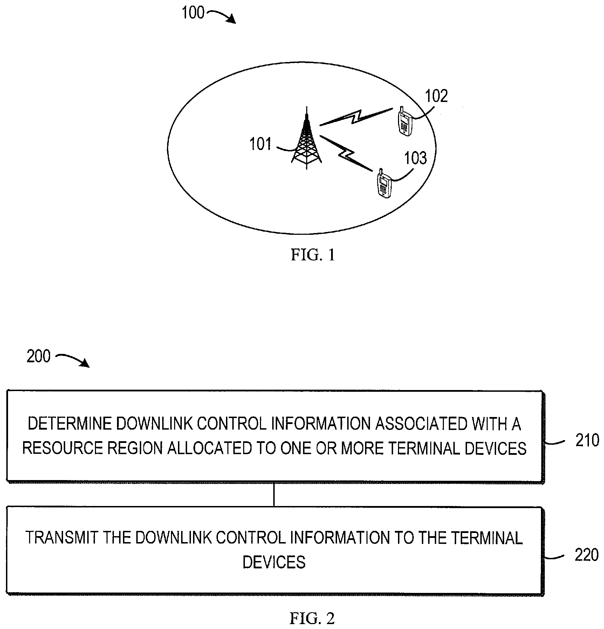

Now some exemplary embodiments of the present disclosure will be described below with reference to the figures. Reference is first made to FIG. 1, which shows a schematic diagram 100 of a wireless communication network. There illustrates a network device 101 and two terminal devices 102 and 103 in the wireless communication network. In the example of FIG. 1, the network device 101 provides services to the terminal device 102 and 103. The traffic between the network device 101 and the terminal devices 102 and/or 103 may have a variety of types, such as URLLC, eMBB, mMTC, and so on. The network device 101 transmits downlink control information about the traffic to the terminal devices 102 and 103, for example, via Physical Downlink Control Channel (PDCCH) or enhanced PDCCH (ePDCCH).

It is to be understood that the configuration of FIG. 1 is described merely for the purpose of illustration, without suggesting any limitation as to the scope of the present disclosure. Those skilled in the art would appreciate that the wireless communication network 100 may include any suitable number of terminal devices and/or network devices and may have other suitable configurations. In some embodiments, the network device 101 may transmit the downlink control information to one or more terminal devices other than the terminal devices 102 and 103.

Conventionally, in LTE, PDCCH or ePDCCH are used to signal the downlink scheduling assignment in PDSCH and uplink scheduling grants. Downlink control information, DCI, is generally transmitted frequently, for example, in each subframe, to assist downlink data reception at a terminal device.

Compared to the eMBB, the data packets for some URLLC traffic and mMTC traffic are much smaller in statistics. The generated load of high reliable DCI transmission for traffic with small packets would be very large. As such, system performance is reduced, which is undesirable.

In order to solve the above and other potential problems, embodiments of the present disclosure provide solutions for transmitting downlink control information less frequently. In accordance with embodiments of the present disclosure, control information, such as PDCCH, is arranged at a resource region crossing a plurality of subframes and/or a plurality of cells. As such, UE can detect the control information at the subframes and/or cells to explore diversity gain. With such "joint encoding/decoding" feature, the control channel reliability can be improved. As a result, robustness of the downlink control channel is enhanced.

FIG. 2 shows a flowchart of a method 200 of transmitting downlink control information in accordance with an embodiment of the present disclosure. With the method 200, the above and other potential deficiencies in the conventional approaches can be overcome. It would be appreciated by those skilled in the art that the method 200 may be implemented by a network device, such as a BS, a server, a controller or other suitable devices. The network device may be, for example, but not limited to, the network device 101 of FIG. 1.

The method 200 is entered at 210, where the network device 101 determines downlink control information associated with a resource region allocated to one or more terminal devices 102 and 103. The downlink control information may be carried by PDCCH and may include a plurality of candidate resource sets for data transmission to the terminal devices. Each candidate resource set may include scheduling information for data transmission on the resource region, such as resource allocation information, a MCS, a Multiple-Input Multiple-Output (MIMO) scheme, a HARQ scheme, a resource number, a channel coding scheme, and so on.

The resource region refers to time-frequency resources allocated to the downlink control information and may cross one or more subframes. The resource region may include one or more resource blocks (RBs) in frequency domain and/or one more Transmission Time Intervals (TTIs) in time domain.

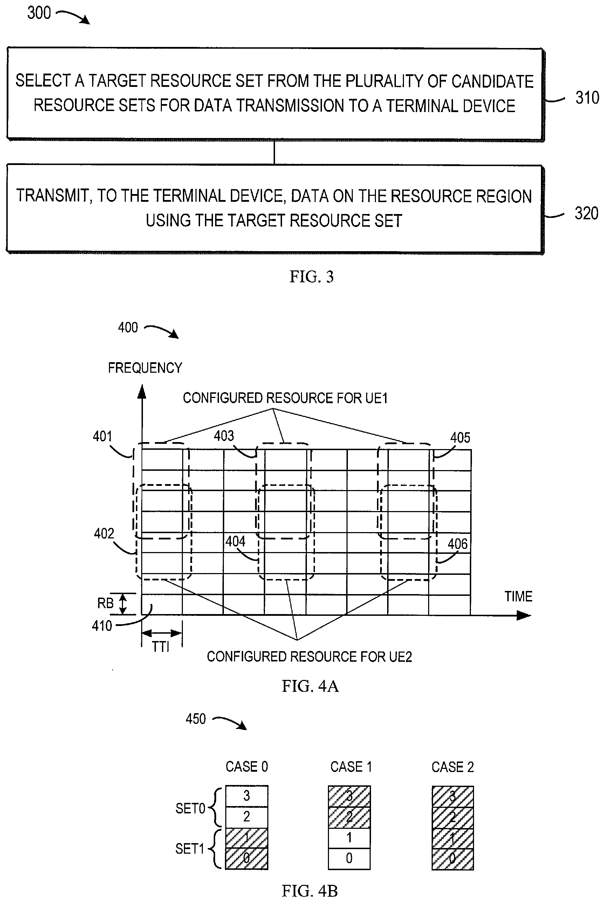

In some embodiments, resource regions allocated to a terminal device 102 or 103 may be discontinuous in a time domain, a frequency domain, or both the time and frequency domain. In addition, or alternatively, in some embodiments, a resource region allocated to a first terminal device (for example, the terminal device 102) may be separated, partially overlapped, or fully overlapped with a resource region allocated to a second terminal device (for example, the terminal device 103). More details of the resource region will be discussed below with respect to FIGs. 4A-6B.

At 220, the network device 101 transmits the downlink control information to the terminal devices 102 and 103, to enable the terminal devices 102 and 103 to perform blind detection of data transmitted on the resource region based on the downlink control information. In some embodiments, the downlink control information is transmitted via a Radio Resource Control (RRC) signaling, a Media Access Control (MAC) signaling (for example, a MAC control element (CE) signaling), a Physical Layer (PHY) signaling, and/or the like.

The network device 101 indicates a subset of the plurality of candidate resource sets to the terminal devices 102 and 103 to enable the terminal devices 102 and 103 to perform detection of the data based on the subset of the plurality of candidate resource sets. The network device 101 determines further downlink control information associated with the resource region. The further downlink control information indicates the subset of the plurality of candidate resource sets. The network device 101 transmits the further downlink control information to the terminal devices 102 and 103 to enable the terminal devices to perform detection of the data based on the further downlink control information. It should be understood that the search space of the data detection in the network device 101 is reduced by indicating the terminal devices 102 and 103 with only a subset of candidate resource sets, thereby decreasing the detection complexity for the network device 101.

In view of the forgoing embodiments, the network device 101 can transmit the downlink control information less frequently than the data transmission. Upon receipt of the downlink control information, the terminal device 102 or 103 performs blind detection of data based thereon. As a result, the overhead for transmitting the downlink control information can be largely reduced.

In some embodiments, the network device 101 may further transmit to the terminal device 102 an indication indicating whether the blind detection needs to be performed. Upon receipt of the indication, the terminal device 102 would understand that whether there a need to perform the blind detection. If so, the terminal device 102 may perform the blind detection of data transmitted on the resource region based on the downlink control information. In this way, the terminal device 102 or 103 may perform the blind detection of the data conditionally. As a result, energy of the terminal device for data reception can be saved.

In some embodiments, the network device 101 may transmit duplicated data on resource regions or sub-regions of the resource regions to the terminal device 102 or 103. Specifically, data may be duplicated and mapped to multiple resource regions or multiple sub-regions of the resource regions according to preconfigured/predefined rules, for example, in case of bad radio conditions. When the terminal device try blind decoding over multiple resource regions or sub-regions, the terminal device may perform soft combining between the resource regions or sub-regions according to the preconfigured/predefined rules.

In accordance with embodiments of the present disclosure, the network device 101 may transmit data to the terminal device 102 by using one of the candidate resource sets. FIG. 3 shows a flowchart of a method 300 of transmitting data in accordance with an embodiment of the present disclosure.

The method 300 enters at 310, where the network device 101 selects a target resource set from the plurality of candidate resource sets for data transmission the terminal device 102. In some embodiments, the network device 101 may select a target resource set from a subset of the plurality of candidate resource sets.

At 320, the network device 101 transmits data on the resource region using the target resource set to the terminal device 102.

In some embodiments, the network device 101 may scramble the data with identification information of the terminal device 102 before transmitting the data. The identification information of the terminal device may be UE specific information, such as a Radio Network Temporary Identity (RNTI) for the terminal device 102, or any other suitable identification information. The network device 101 may scramble the data in a variety of ways. In an embodiment, the network device 101 may scramble at least one of: a Cyclic Redundancy Check, CRC, sequence of the data; a Media Access Control, MAC, head of the data; and part or whole of the data. It is to be understood that the scrambling methods are described merely for the purpose of illustration, without suggesting any limitation as to the scope of the present disclosure. Those skilled in the art would appreciate that the data may be scrambled in any other suitable ways. After the data is scrambled, the network device 101 may transmit the scrambled data on the resource region to the terminal device 102.

In some embodiments, the resource region may include a plurality of sub-regions. In this case, at 320, the network device 101 may transmit the data on one or more sub-regions of the resource region. More specifically, the network device 101 may select, from the sub-regions, a sub-region set including one or more sub-regions. The network device 101 may determine, from the candidate resource sets, a target resource set for the sub-region set. Next, the network device 101 may transmit the data on the sub-region set using the target resource set to the terminal device 102.

According to embodiments of the present disclosure, the resource region to be used for downlink (DL) data transmission may be semi-statically preconfigured for a terminal device (also referred to as the "UE" hereafter) using a DCI, MAC CE, RRC signaling or other suitable signaling. The exact resource set for data transmission for a UE may be adaptively allocated within the resource region and the UE may try blind detections for different radio resource allocation probabilities which are determined based on the predefined/preconfigured rules. For example, a MCS set may be preconfigured and the network device (also referred to as the "eNB" hereafter) may select a MCS from the MCS set for data transmission. The UE may try different possibilities of radio resource allocation and/or different MCSs within the MCS set during the blind detection for data. In such a way, it is unnecessary to transmit a DCI associated with each data transmission and/or one or more DCI fields, such as the resource allocation field.

Now more embodiments are discussed with respect to FIGs. 4A-6B. For purpose of discussion, the terminal device is referred to as UE, the network device is referred to as eNB, and the control information is referred to as PDCCH hereafter. It is to be understood that these are discussed for purpose of illustration, rather than suggesting any limitation.

Reference is now made to FIG. 4A, which shows a diagram 400 of a resource region in accordance with an embodiment of the present disclosure. In the example of FIG. 4A, a resource region consists 4 resource blocks (RBs) 410, and the time length for each RB is a TTI. A resource region may be allocated for one or more UEs and the resource region for different UEs may be separate, fully or partially overlapped. A UE may perform blind detection of data for its own data even when no concrete resource allocation information at DCI is transmitted for each of radio resource allocation possibilities determined according to predefined rules.

As shown in FIG. 4A, there illustrate 6 resource regions 401 to 406. Each of the resource regions 401-406 includes at least one resource set. The UE performs blind detection for data based on the possible radio resource allocations.

In some embodiments, one or more transmission formats (also referred to as the "scheduling information") are associated with the resource region. The transmission formats comprise one or more of MCS, MIMO transmission schemes, HARQ information, number of resources used for the transmission, the channel coding scheme, and so on. Regarding the MCS, a MCS set may be configured (for example, a fixed MCS is a special case) and the UE may try different MCSs for each possible resource allocation.

If the network device 101 and the terminal device 102 communicate in MIMO system, the MIMO transmission schemes may include one or more of: the number of layers, open loop or semi-open loop or closed-loop transmission, etc., the RS configuration (whether it is a Demodulation Reference Signal (DMRS)-based or non-DMRS based scheme), the number of codewords, quasi-collocated information (QCL) information, and so on.

The HARQ information may include a Redundancy Version (RV) and/or other suitable information. The number of resources used for the transmission may include one or more of: the number of physical resource blocks (PRBs), or the number of mini-slots, etc.

It is to be understood that the above example is only described for purpose of discussion, rather than suggesting any limitation. Those skilled in the art would appreciate that the terminal device may try different transmission format hypothesis to decode the data for each possible resource allocation.

As a further embodiment, resource regions of different UEs may be separated, partially or fully overlapped. As such, it is possible to improve the radio resource utilization efficiency.

In the example of FIG. 4A, resource regions 401, 403 and 405 for UE 1 (for example, the terminal device 102) are partially overlapped resource regions 402, 404 and 406 for UE 2 (for example, the terminal device 103), respectively. Each resource region may two resource sets, each of which may have 3 resource allocation possibilities for data transmission.

FIG. 4B shows a diagram 450 of resource sets in accordance with an embodiment of the present disclosure. In embodiments of FIG. 4B, there are two resource sets, namely, SET 0 and SET 1, associated with a resource region, for example, resource region 401. The resource region includes four sub-regions, for example, RBs. In case 0, SET 0 is allocated to sub-regions 2 and 3 carrying data to UE1 and SET 1 is allocated to sub-regions 1 and 0 carrying data to UE2. In case 1, SET 0 is allocated to sub-regions 2 and 3 carrying data to UE2 and SET 1 is allocated to sub-regions 1 and 0 carrying data to UE1. In case 3, SET 0 is allocated to sub-regions 1-4 carrying data to UE1 and SET 1 is allocated to sub-regions 1-4 carrying data to UE2.

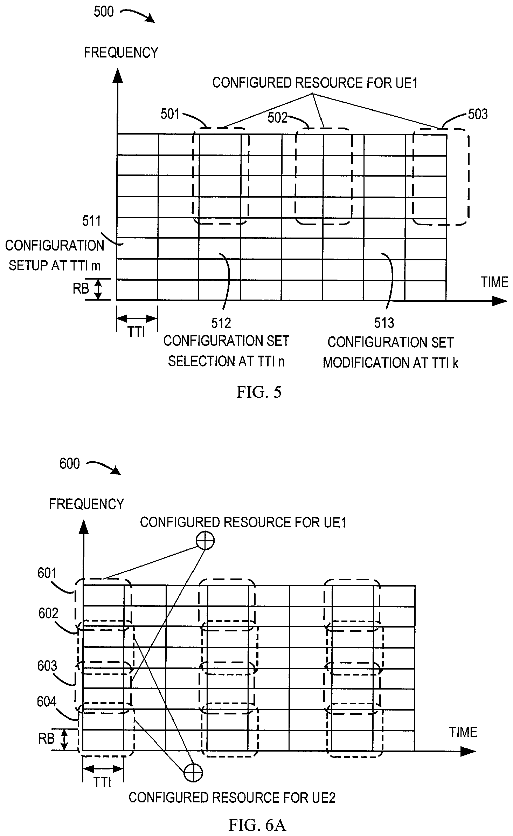

Now reference is made to FIG. 5, which shows a diagram 500 of a resource region in accordance with another embodiment of the present disclosure. In the example of FIG. 5, the configured resource for UE1 includes three resource regions 501, 502 and 503.

In the embodiment, configurations for the resource region and the transmission formats may include one or more parts 511, 512 and 513. In a first part 511, it provides the basic configuration for the resource region and transmission formats at TTI m. In the other part 512 or 513, it provides selection or modification of the configuration at TTI n and TTI k, respectively. In this example, m, n and k are all positive integers, wherein m<n<k. As one example, in the first part 511, the candidate sets of transmission formats are configured at TTI m as {set_0, set_1, ..., set_N}. They are sent in a semi-static way. One example is using the RRC signaling.

At the TTI n, a dynamic signaling is optionally provided for selection of a subset from the candidate sets, and UE performs blind detection with the hypothesis defined in the selected subset. The subset is used until it is informed to be modified. As one alternative, UEs may monitor the data transmission in the configured region as well as the DCI. In case that a UE receives a DCI indicates the change of the transmission formats or the allocated resource, the UE needs to update its hypothesis for the data blind detection in the following transmission chances. As another alternative, the information on the selection or modification may be carried over the transmission data. When a UE detects the new information within data, the UE may use this information for the following data reception.

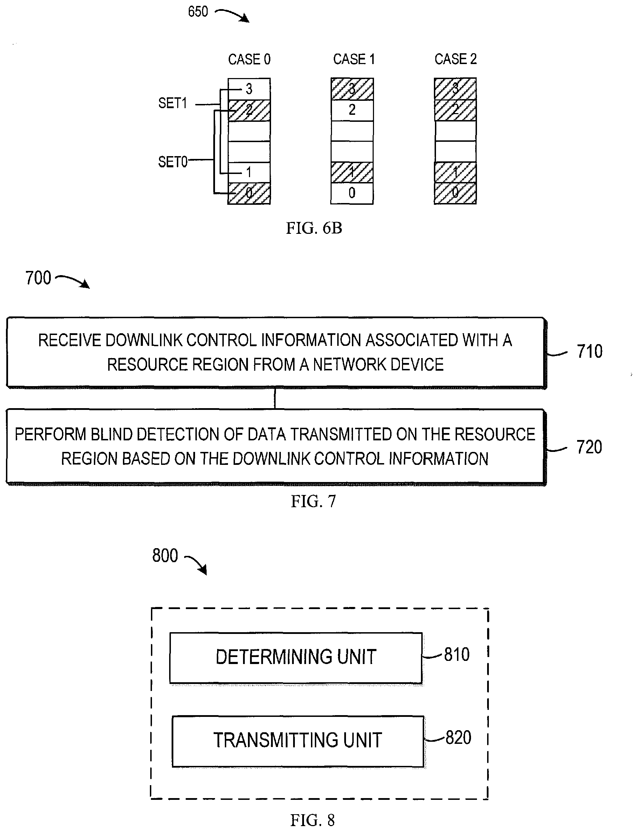

Now reference is made to FIG. 6A which shows a diagram 600 of a resource region in accordance with still another embodiment of the present disclosure. In order to enhance the transmission diversity in frequency domain, the radio resource belonging to one resource set or resource region may be distributed according to the capability of the UE. The resource region for UE 1 or UE 2 comprises two parts at both sides of the configured bandwidth of a UE. For each resource region, there may be two resource sets and each resource set comprises two resource blocks at both sides of the resource region. FIG. 6B shows a diagram 650 of resource sets in accordance with an embodiment of the present disclosure. The resource set(s) with slash filled RBs is (are) used for data transmission for different cases, namely, CASE 0, CASE 1 and CASE 2. Localized resource region and resource set configuration are similar to the embodiment illustrated in FIG. 4A, for which the RBs belonging to a resource region or resource set are consecutive.

According to embodiments of the present disclosure, one data may be mapped to multiple resource sets according to preconfigured/predefined rules in the resource region for a UE in case of bad radio conditions. When the UE try blind decoding over multiple resource sets, the UE may perform soft combining between the resource sets according to preconfigured/predefined rules. For instance, when the resource allocation is as Case 2 in FIG. 4B, the eNB may transmit the data in resource set 0 (RBs 0 and 1) and resource set 1 (RBs 2 and 3). The UE may perform soft combining between resource set 0 and 1 at blind detection. The mapping may be duplicate, rate-matching, or the like.

In some embodiments, although non-DCI associated data transmission can be configured for a UE, meanwhile, the UE may be also configured to monitor DCI for user plane data transmission conditionally. There may be different transmitter behaviors and associated receiver behaviors, which are to be discussed below with reference to schemes 1 to 3.

Scheme 1: It may be predefined/preconfigured that a UE only performs data decoding (no blind detection within the configured resource region) according to the received DCI when a DCI for user specific data transmission is detected. This scheme is applicable for the case that the UE has one or multiple data radio bearers (DRBs) which can be multiplexed over one MAC Protocol Data Unit (PDU). For instance, a UE has URLLC traffic or mMTC traffic for which the user plane packets are small packets, but there could be occasionally large packets which are unable to be carried by the transmission using the configured resource region, in this case the eNB may use DCI to indicate the transmission of the large packet. The UE does not need to perform blind detection based on the configured resource region anymore when a DCI for user plane data is detected.

Scheme 2: It can be predefined/preconfigured that a UE shall perform data decoding (no blind detection within the configured resource region) according to the received DCI when a DCI for user plane data transmission is detected, meanwhile the UE shall perform the blind detection over the configured resource region if the configured resource region is not used for data transmission according to the received DCI. This scheme is applicable when one UE has more than one service and the data for the different services cannot be multiplexed within one MAC PDU due to different QoS requirements. For instance, when a UE has both URLLC traffic and eMBB traffic, the transmitter and the receiver can be configured to use this scheme.

Scheme 3: it is a combination of scheme 1 and scheme 2. It may be predefined/preconfigured that a UE shall perform data decoding (no blind detection within the configured resource region) according to the received DCI when a DCI for user plane data transmission is detected, meanwhile providing an indication in the received DCI to indicate whether the UE shall perform the blind detection over the configured resource region or not. If it indicates the UE shall perform the blind detection over the configured resource region, UE shall perform the blind detection over the configured resource region in the case that the configured resource region is not used for data transmission according to the received DCI. Otherwise, UE will skip the blind detection over the configured resource region.

In some embodiments, a new DCI format or field(s) may be introduced to indicate the starting or stopping of the blind detection, and/or blind detection resource block specification.

In some embodiment, the network device may reconfigure the resource region according to the CSI report of the UE via RRC signaling, MAC CE or physical layer signaling (e.g. DCI over PDCCH). The UE may report the CSI for the preferred time frequency resources to the network device and the network device may determine the adjusted configuration of the resource region for a UE.

In some embodiment, it may be either predefined/preconfigured to use which resource region/set definition is to be used via RRC signaling.

In some embodiment, at least part of the data decoding relies on the information which can identify the UE. As one example, the CRC of the data is scrambled by UE specific information. One example of this UE specific information is the RNTI for this UE. As another example, the part or the whole data is scrambled by UE specific information. As another example, the MAC header of the data is scrambled by the UE specific information. With this embodiment, UE can decode its own data but cannot decode other UE's data for data security.

Reference is now made to FIG. 7, which shows a flowchart of a method 700 of receiving downlink control information in accordance with an embodiment of the present disclosure. It would be appreciated by those skilled in the art that the method 700 may be implemented by a terminal device, such as a UE, a mobile phone or other suitable devices. The terminal device may be, for example, but not limited to, the terminal device 102 or 103 of FIG. 1. In the following embodiments, the terminal device 102 is discussed as the example of the terminal device. It is to be understood that the terminal device 102 is just an example, rather than suggesting any limitation.

The method 700 is entered at 710, where the terminal device 102 receives downlink control information associated with a resource region from a network device 101. The downlink control information includes a plurality of candidate resource sets for data transmission to the terminal device.

In some embodiments, the terminal device 102 receives an indication associated with a subset of the plurality of candidate resource sets:
the terminal device 102 receives further downlink control information associated with the resource region. The downlink control information indicates a subset of the plurality of candidate resource sets for the data transmission to the terminal device.

In some embodiments, the terminal device 102 receives the downlink control information via a RRC signaling, a MAC signaling, a PHY signaling, and so on.

At 720, the terminal device 102 performs blind detection of data transmitted on the resource region based on the downlink control information. The blind detection may be performed in a variety of ways. In some embodiments, the terminal device 102 descrambles the data with identification information of the terminal device 102. When descrambling the data, the terminal device 102 may descramble at least one of: a Cyclic Redundancy Check, CRC, sequence of the data; a Media Access Control, MAC, head of the data; and part or whole of the data.

The terminal device 102 performs detection of the data transmitted on the resource region based on the further downlink control information.

The resource region includes a plurality of sub-regions. The terminal device 102 performs blind detection of data on the sub-regions of the resource region.

In some embodiments, the terminal device 102 may perform blind detection of data on resource regions or sub-regions of the resource regions. In response to the detected data being duplicated, the terminal device 102 may combine the detected data.

In some embodiments, the network device 101 may send an indication to the terminal device 102 to indicate whether the blind detection needs to be performed. Upon receipt of an indication indicating that the blind detection needs to be performed, the terminal device 102 may perform the blind detection.

In some embodiments, the network device 101 may send an indication to the terminal device 102 to indicate the target resource set. Upon receipt of the indication, the terminal device 102 may detect the data on the resource region using the target resource set.

Now reference is made to FIG. 8, which shows a block diagram of an apparatus 800 in accordance with an embodiment of the present disclosure. It would be appreciated that the apparatus 800 may be implemented at a network device or any other suitable device.

As shown, the apparatus 800 includes a determining unit 810 and a transmitting unit 820. The determining unit 810 is configured to determine downlink control information associated with a resource region allocated to one or more terminal devices, the downlink control information including a plurality of candidate resource sets for data transmission to the terminal devices. The transmitting unit 820 is configured to transmit the downlink control information to the terminal devices to enable the terminal devices to perform blind detection of data transmitted on the resource region based on the downlink control information.

In an embodiment, the transmitting unit 820 may be further configured to: transmit the downlink control information via a Radio Resource Control, RRC, signaling.

In an embodiment, the determining unit 810 may be further configured to select a target resource set from the plurality of candidate resource sets for data transmission to a terminal device; and the transmitting unit 820 may be further configured to transmit, to the terminal device, data on the resource region using the target resource set.

In an embodiment, the transmitting unit 820 may be further configured to transmit an indication of the target resource set to the terminal device.

In an embodiment, the network device may further comprise a scrambling unit configured to scramble the data with identification information of the terminal device; and the transmitting unit 820 may be further configured to transmit the scrambled data on the resource region.

In an embodiment, the scrambling unit may be further configured to scramble at least one of a Cyclic Redundancy Check, CRC, sequence of the data; a Media Access Control, MAC, head of the data; and part or whole of the data.

In an embodiment, the resource region may include a plurality of sub-regions, and the determining unit 810 may be further configured to select a sub-region set from the sub-regions, the sub-region set including one or more sub-regions, and determine, from the candidate resource sets, a target resource set for the sub-region set. The transmitting unit 820 may be further configured to transmit, to the terminal device, the data on the sub-region set using the target resource set.

In an embodiment, the transmitting unit 820 may be further configured to transmit, to the terminal device, duplicated data on resource regions or sub-regions of the resource regions.

In an embodiment, the transmitting unit 820 may be further configured to transmit to the terminal device an indication indicating whether the blind detection needs to be performed.

In an embodiment, resource regions allocated to a terminal device are discontinuous in a time domain, a frequency domain, or both the time and frequency domain, and/or a resource region allocated to a first terminal device is separated, partially overlapped, or fully overlapped with a resource region allocated to a second terminal device.

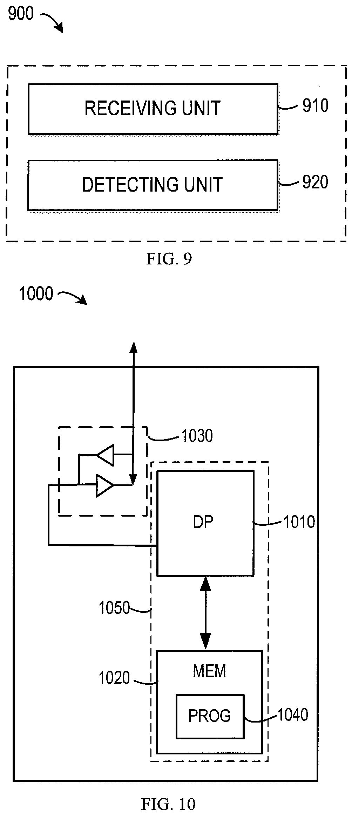

Now reference is made to FIG. 9, which shows a block diagram of an apparatus 900 in accordance with an embodiment of the present disclosure. It would be appreciated that the apparatus 900 may be implemented at a terminal device or any other suitable device.

As shown, the apparatus 900 includes a receiving unit 910 configured to receive downlink control information associated with a resource region from a network device, the downlink control information including a plurality of candidate resource sets for data transmission to the terminal device; and a detecting unit 920 configured to perform blind detection of data transmitted on the resource region based on the downlink control information.

In an embodiment, the receiving unit 910 is further configured to: receive the downlink control information via a Radio Resource Control, RRC, signaling, a Media Access Control, MAC, signaling, or a Physical Layer, PHY, signaling.

In an embodiment, the detecting unit 920 is further configured to: in response to receiving an indication of a target resource set from the network device, detect the data on the resource region using the target resource set.

In an embodiment, the detecting unit 920 is further configured to: descramble the data with identification information of the terminal device.

In an embodiment, the detecting unit 920 is further configured to descramble at least one of a Cyclic Redundancy Check, CRC, sequence of the data; a Media Access Control, MAC, head of the data; and part or whole of the data.

In an embodiment, the resource region includes a plurality of sub-regions, and wherein the detecting unit 920 is further configured to: perform blind detection of data on the sub-regions of the resource region.

In an embodiment, the detecting unit 920 is further configured to: perform blind detection of data on resource regions or sub-regions of the resource regions; and in response to the detected data being duplicated, combine the detected data.

In an embodiment, the receiving unit 910 is further configured to: receive an indication indicating whether the blind detection needs to be performed; and the detecting unit 920 is further configured to: in response to the indication indicating that the blind detection needs to be performed, perform the blind detection.

It should be appreciated that components included in the apparatus 800 correspond to the operations of the methods 200 and 300, and components included in the apparatus 900 correspond to the operations of the method 700. Therefore, all operations and features described above with reference to FIGs. 2 and 3 are likewise applicable to the components included in the apparatus 800 and have similar effects, and all operations and features described above with reference to FIG. 7 are likewise applicable to the components included in the apparatus 900 and have similar effects. For the purpose of simplification, the details will be omitted.

The components included in the apparatuses 800 and 900 may be implemented in various manners, including software, hardware, firmware, or any combination thereof. In one embodiment, one or more units may be implemented using software and/or firmware, for example, machine-executable instructions stored on the storage medium. In addition to or instead of machine-executable instructions, parts or all of the components included in the apparatuses 800 and 900 may be implemented, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

FIG. 10 shows a simplified block diagram of a device 1000 that is suitable for implementing embodiments of the present disclosure. It would be appreciated that the device 1000 may be implemented as at least a part of, for example, the network device 101 or the terminal device 102.

As shown, the device 1000 includes a communicating means 1030 and a processing means 1050. The processing means 1050 includes a data processor (DP) 1010, a memory (MEM) 1020 coupled to the DP 1010. The communicating means 1030 is coupled to the DP 1010 in the processing means 1050. The MEM 1020 stores a program (PROG) 1040. The communicating means 1030 is for communications with other devices, which may be implemented as a transceiver for transmitting/receiving signals.

In some embodiments where the device 1000 acts as a network device, the processing means 1050 may be configured to determine downlink control information associated with a resource region allocated to one or more terminal devices, the downlink control information including a plurality of candidate resource sets for data transmission to the terminal devices; and the communicating means 1030 may be configured to transmit the downlink control information to the terminal devices to enable the terminal devices to perform blind detection of data transmitted on the resource region based on the downlink control information. In some other embodiments where the device 1000 acts as a terminal device, the communicating means 1030 may be configured to receive downlink control information associated with a resource region from a network device, the downlink control information including a plurality of candidate resource sets for data transmission to the terminal device; and the processing means 1050 may be configured to perform blind detection of data transmitted on the resource region based on the downlink control information.

The PROG 1040 is assumed to include program instructions that, when executed by the associated DP 1010, enable the device 1000 to operate in accordance with the embodiments of the present disclosure, as discussed herein with the method 200, 300 or 700. The embodiments herein may be implemented by computer software executable by the DP 1010 of the device 1000, or by hardware, or by a combination of software and hardware. A combination of the data processor 1010 and MEM 1020 may form processing means 1050 adapted to implement various embodiments of the present disclosure.

The MEM 1020 may be of any type suitable to the local technical environment and may be implemented using any suitable data storage technology, such as semiconductor based memory devices, magnetic memory devices and systems, optical memory devices and systems, fixed memory and removable memory, as non-limiting examples. While only one MEM is shown in the device 1000, there may be several physically distinct memory modules in the device 1000. The DP 1010 may be of any type suitable to the local technical environment, and may include one or more of general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

By way of example, embodiments of the present disclosure can be described in the general context of machine-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. The machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In the context of this disclosure, the device may be implemented in the general context of computer system-executable instructions, such as program modules, being executed by a computer system. Generally, program modules may include routines, programs, objects, components, logic, data structures, and so on that perform particular tasks or implement particular abstract data types. The device may be practiced in distributed cloud computing environments where tasks are performed by remote processing devices that are linked through a communications network. In a distributed cloud computing environment, program modules may be located in both local and remote computer system storage media including memory storage devices.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A method (200) implemented at a network device (101), comprising:
determining (210) downlink control information, DCI, for instructing a first terminal device (102, 103) to perform blind detection of data transmitted on a resource region allocated to the first terminal device (102, 103), the DCI including a plurality of candidate resource sets for data transmission to the first terminal device (102, 103);
transmitting (220) the DCI to the first terminal device (102, 103); and
indicating a subset of the plurality of candidate resource sets to the first terminal device (102, 103), the subset being information for enabling the terminal device to perform detection of the data based on the subset of the plurality of candidate resource sets, wherein indicating the subset of the plurality of candidate resource sets comprises:
- determining a further DCI for instructing the first terminal device to perform detection of the data transmitted on the resource region, the further DCI indicating the subset of the plurality of candidate resource sets; and
- transmitting the further DCI to the first terminal device.

2. The method (200) according to claim 1, further comprising:
selecting (310) a target resource set from the plurality of candidate resource sets for data transmission to the first terminal device; and
transmitting (320), to the first terminal device, data on the resource region using the target resource set.

3. The method (200) of claim 2, further comprising:
transmitting an indication of the target resource set to the first terminal device.

4. The method (200) according to claim 2 or 3, wherein transmitting the data on the resource region comprises:
scrambling the data with identification information of the first terminal device; and
transmitting the scrambled data on the resource region.

5. The method (200) according to claim 4,
wherein scrambling the data comprises scrambling at least one of:
a Cyclic Redundancy Check, CRC, sequence of the data;
a Media Access Control, MAC, head of the data; and
part or whole of the data.

6. The method (200) according to claim 2 or 3, wherein the resource region includes a plurality of sub-regions, and wherein transmitting the data on the resource region comprises:
selecting a sub-region set from the sub-regions, the sub-region set including one or more of the sub-regions;
determining, from the candidate resource sets, a target resource set for the sub-region set; and
transmitting, to the first terminal device, the data on the sub-region set using the target resource set.

7. The method (200) according to claim 1, wherein the method further comprises one or more of the following:
- transmitting, to the first terminal device, the data duplicated on sub-regions of the resource region;
- transmitting to the first terminal device an indication indicating whether the blind detection on the data transmitted on the resource region based on the DCI needs to be performed;
- the resource region allocated to the first terminal device is discontinuous in a time domain, a frequency domain, or both the time and frequency domain;
- the resource region allocated to the first terminal device is separated, partially overlapped, or fully overlapped with a resource region allocated to a second terminal device.

8. A method (700) implemented at a first terminal device (102, 103), comprising:
receiving (710) downlink control information, DCI, associated with a resource region from a network device (101), the DCI including a plurality of candidate resource sets for data transmission to the first terminal device;
receiving an indication of a subset of the plurality of candidate resources, wherein receiving the indication comprises:
- receiving further DCI associated with the resource region, the DCI indicating a subset of the plurality of candidate resource sets for the data transmission to the first terminal device; and
performing blind detection of data transmitted on the resource region based on the DCI, wherein said performing comprises:
- performing (720) blind detection of the data transmitted on the resource region based on the further DCI.

9. The method (700) according to claim 8, wherein receiving DCI comprises:
receiving the DCI via a Radio Resource Control, RRC, signaling, a Media Access Control, MAC, signaling, or a Physical Layer, PHY, signaling.

10. The method (700) according to claim 8, further comprising:
in response to receiving an indication of a target resource set from the network device (101), performing the blind detection of the data on the resource region using the target resource set.

11. The method (700) according to claim 8, wherein performing the blind detection of the data transmitted on the resource region comprises one of the following:
- descrambling the data with identification information of the first terminal device;
- performing the blind detection of the data on sub-regions of the resource region; and in response to the detected data being duplicated, combining the detected data;
- receiving an indication indicating whether the blind detection of the data transmitted on the resource region based on the DCI needs to be performed; and in response to the indication indicating that the blind detection of the data transmitted on the resource region based on the DCI needs to be performed, performing the blind detection of the data transmitted on the resource region based on the DCI.

12. The method (700) according to claim 8, wherein the resource region includes a plurality of sub-regions, and wherein performing the blind detection of the data transmitted on the resource region comprises:
performing the blind detection of the data on the sub-regions of the resource region.

13. A computer readable medium (1020) having instructions (1040) stored thereon, the instructions being adapted, when executed on at least one processor (1010), to cause the at least one processor to carry out the method (200, 700) according to any of claims 1 to 12.

14. A network device (101, 1000), comprising:
a processor (1010); and
a memory (1020) coupled to the processor and storing instructions thereon, the instructions being adapted, when executed by the processor, to cause the network device (101, 1000) at least to perform the method according to any one of claims 1 to 7.

15. A terminal device (102, 103, 1000), comprising:
a processor (1010); and
a memory (1020) coupled to the processor and storing instructions thereon, the instructions being adapted, when executed by the processor, to cause the terminal device (102, 103, 1000) at least to perform the method according to any one of claims 8 to 12.

## Patentansprüche

1. Verfahren (200), das an einer Netzwerkvorrichtung (101) implementiert wird und umfasst:
Bestimmen (210) von Downlink-Steuerinformationen, DCI, um eine erste Endgerätevorrichtung (102, 103) zum Durchführen von Blinderkennung von Daten anzuweisen, die auf einer Ressourcenregion gesendet werden, die der ersten Endgerätevorrichtung (102, 103) zugewiesen ist, wobei die DCI eine Mehrzahl von Kandidaten-Ressourcensätzen zur Datenübertragung an die erste Endgerätevorrichtung (102, 103) umfassen;
Senden (220) der DCI an die erste Endgerätevorrichtung (102, 103); und
Anzeigen einer Teilmenge der Mehrzahl von Kandidaten-Ressourcensätzen für die erste Endgerätevorrichtung (102, 103), wobei es sich bei der Teilmenge um Informationen handelt, die die Endgerätevorrichtung zum Durchführen von Erkennung der Daten basierend auf der Teilmenge der Mehrzahl von Kandidaten-Ressourcensätzen befähigen, wobei das Anzeigen der Teilmenge der Mehrzahl von Kandidaten-Ressourcensätze umfasst:
- Bestimmen von weiteren DCI, um die erste Endgerätevorrichtung zum Durchführen von Erkennung der Daten anzuweisen, die auf der Ressourcenregion gesendet werden, wobei die weiteren DCI die Teilmenge der Mehrzahl von Kandidaten-Ressourcensätzen anzeigen; und
- Senden der weiteren DCI an die erste Endgerätevorrichtung.

2. Verfahren (200) nach Anspruch 1, ferner umfassend:
Auswählen (310) eines Ziel-Ressourcensatzes aus der Mehrzahl von Kandidaten-Ressourcensätzen zur Datenübertragung an die erste Endgerätevorrichtung; und
Senden (320) von Daten auf der Ressourcenregion unter Verwendung des Ziel-Ressourcensatzes an die erste Endgerätevorrichtung.

3. Verfahren (200) nach Anspruch 2, ferner umfassend:
Senden einer Anzeige des Ziel-Ressourcensatzes an die erste Endgerätevorrichtung.

4. Verfahren (200) nach Anspruch 2 oder 3, wobei das Senden der Daten auf der Ressourcenregion umfasst:
Verwürfeln der Daten mit Identifikationsinformationen der ersten Endgerätevorrichtung; und
Senden der verwürfelten Daten auf der Ressourcenregion.

5. Verfahren (200) nach Anspruch 4,
wobei das Verwürfeln der Daten ein Verwürfeln von mindestens einem umfasst von:
einer Sequenz einer zyklischen Redundanzprüfung, CRC, der Daten;
einem Medienzugriffssteuerungs-,MAC-,Kopf der Daten; und
einem Teil oder der Gesamtheit der Daten.

6. Verfahren (200) nach Anspruch 2 oder 3, wobei die Ressourcenregion eine Mehrzahl von Teilregionen umfasst, und wobei das Senden der Daten auf der Ressourcenregion umfasst:
Auswählen eines Teilregionssatzes aus den Teilregionen, wobei der Teilregionssatz eine oder mehrere der Teilregionen umfasst;
Bestimmen eines Ziel-Ressourcensatzes aus den Kandidaten-Ressourcensätzen für den Teilregionssatz; und
Senden der Daten auf dem Teilregionssatz unter Verwendung des Ziel-Ressourcensatzes an die erste Endgerätevorrichtung.

7. Verfahren (200) nach Anspruch 1, wobei das Verfahren ferner eines oder mehreres von Folgendem umfasst:
- Senden der Daten dupliziert auf Teilregionen der Ressourcenregion an die erste Endgerätevorrichtung;
- Senden einer Anzeige, die anzeigt, ob die Blinderkennung an den auf der Ressourcenregion gesendeten Daten basierend auf den DCI durchgeführt werden muss, an die erste Endgerätevorrichtung;
- wobei die der ersten Endgerätevorrichtung zugewiesene Ressourcenregion in einer Zeitdomäne, einer Frequenzdomäne oder sowohl der Zeit- als auch der Frequenzdomäne diskontinuierlich ist;
- wobei die der ersten Endgerätevorrichtung zugewiesene Ressourcenregion von einer Ressourcenregion, die einer zweiten Endgerätevorrichtung zugewiesen ist, getrennt, teilweise überlappt oder vollständig überlappt ist.

8. Verfahren (700), das an einer ersten Endgeräteeinrichtung (102, 103) implementiert wird und umfasst:
Empfangen (710) von Downlink-Steuerinformationen, DCI, die mit einer Ressourcenregion assoziiert sind, von einer Netzwerkvorrichtung (101), wobei die DCI eine Mehrzahl von Kandidaten-Ressourcensätzen zur Datenübertragung an die erste Endgerätevorrichtung umfassen;
Empfangen einer Anzeige einer Teilmenge der Mehrzahl von Kandidatenressourcen, wobei das Empfangen der Anzeige umfasst:
- Empfangen von weiteren DCI, die mit der Ressourcenregion assoziiert sind, wobei die DCI eine Teilmenge der Mehrzahl von Kandidaten-Ressourcensätzen für die Datenübertragung an die erste Endgerätevorrichtung anzeigen; und
- Durchführen von Blinderkennung von Daten, die auf der Ressourcenregion gesendet werden, basierend auf den DCI, wobei das Durchführen umfasst:
- Durchführen (720) von Blinderkennung der auf der Ressourcenregion gesendeten Daten basierend auf den weiteren DCI.

9. Verfahren (700) nach Anspruch 8, wobei das Empfangen von DCI umfasst:
Empfangen der DCI über eine Funkressourcensteuerungs-,RRC-,Signalisierung, eine Medienzugriffssteuerungs-,MAC-,Signalisierung oder eine Bitübertragungsschicht-,PHY-,Signalisierung.

10. Verfahren (700) nach Anspruch 8, ferner umfassend:
Durchführen der Blinderkennung der Daten auf der Ressourcenregion unter Verwendung eines Ziel-Ressourcensatzes in Reaktion auf ein Empfangen einer Anzeige des Ziel-Ressourcensatzes von der Netzwerkvorrichtung (101).

11. Verfahren (700) nach Anspruch 8, wobei das Durchführen der Blinderkennung der auf der Ressourcenregion gesendeten Daten eines von Folgendem umfasst:
- Entwürfeln der Daten mit Identifikationsinformationen der ersten Endgerätevorrichtung;
- Durchführen der Blinderkennung der Daten auf Teilregionen der Ressourcenregion; und Kombinieren der erkannten Daten in Reaktion darauf, dass die detektieren Daten dupliziert sind;
- Empfangen einer Anzeige, die anzeigt, ob die Blinderkennung der auf der Ressourcenregion gesendeten Daten basierend auf den DCI durchgeführt werden muss; und Durchführen der Blinderkennung der auf der Ressourcenregion gesendeten Daten basierend auf den DCI in Reaktion auf die Anzeige, die anzeigt, dass die Blinderkennung der auf der Ressourcenregion gesendeten Daten basierend auf den DCI durchgeführt werden muss.

12. Verfahren (700) nach Anspruch 8, wobei die Ressourcenregion eine Mehrzahl von Teilregionen umfasst, und wobei das Durchführen der Blinderkennung der auf der Ressourcenregion gesendeten Daten umfasst:
Durchführen der Blinderkennung der Daten auf den Teilregionen der Ressourcenregion.

13. Computerlesbares Medium (1020) mit darauf gespeicherten Anweisungen (1040), wobei die Anweisungen so ausgelegt sind, dass sie bei Ausführung auf mindestens einem Prozessor (1010) den mindestens einen Prozessor zum Durchführen des Verfahrens (200, 700) nach einem der Ansprüche 1 bis 12 veranlassen.

14. Netzvorrichtung (101, 1000), umfassend:
einen Prozessor (1010); und
einen Speicher (1020), der mit dem Prozessor gekoppelt ist und Anweisungen darauf speichert, wobei die Anweisungen so ausgelegt sind, dass sie bei Ausführung durch den Prozessor die Netzwerkvorrichtung (101, 1000) zumindest zum Durchführen des Verfahrens nach einem der Ansprüche 1 bis 7 veranlassen.

15. Endgerätevorrichtung (102, 102, 1000), umfassend:
einen Prozessor (1010); und
einen Speicher (1020), der mit dem Prozessor gekoppelt ist und Anweisungen darauf speichert, wobei die Anweisungen so ausgelegt sind, dass sie bei Ausführung durch den Prozessor die Endgerätevorrichtung (102, 103, 1000) zumindest zum Durchführen des Verfahrens nach einem der Ansprüche 8 bis 12 veranlassen.

## Revendications

1. Procédé (200) mis en oeuvre au niveau d'un dispositif de réseau (101), comprenant :
la détermination (210) d'informations de commande de liaison descendante, DCI, pour instruire à un premier dispositif terminal (102, 103) de réaliser une détection aveugle de données transmises sur une région de ressources allouée au premier dispositif terminal (102, 103), les DCI incluant une pluralité d'ensembles de ressources candidates pour une transmission de données au premier dispositif terminal (102, 103) ;
la transmission (220) des DCI au premier dispositif terminal (102, 103) ; et
l'indication d'un sous-ensemble de la pluralité d'ensembles de ressources candidates au premier dispositif terminal (102, 103), le sous-ensemble étant des informations pour permettre au dispositif terminal de réaliser une détection des données sur la base du sous-ensemble de la pluralité d'ensembles de ressources candidates, dans lequel l'indication du sous-ensemble de la pluralité d'ensembles de ressources candidates comprend :
- la détermination d'autres DCI pour instruire au premier dispositif terminal de réaliser une détection des données transmises sur la région de ressources, les autres DCI indiquant le sous-ensemble de la pluralité d'ensembles de ressources candidates ; et
- la transmission des autres DCI au premier dispositif terminal.

2. Procédé (200) selon la revendication 1, comprenant en outre :
la sélection (310) d'un ensemble de ressources cible parmi la pluralité d'ensembles de ressources candidates pour une transmission de données au premier dispositif terminal ; et
la transmission (320), au premier dispositif terminal, de données sur la région de ressources en utilisant l'ensemble de ressources cible.

3. Procédé (200) selon la revendication 2, comprenant en outre :
la transmission d'une indication de l'ensemble de ressources cible au premier dispositif terminal.

4. Procédé (200) selon la revendication 2 ou 3, dans lequel la transmission des données sur la région de ressources comprend :
le brouillage des données avec des informations d'identification du premier dispositif terminal ; et
la transmission des données brouillées sur la région de ressources.

5. Procédé (200) selon la revendication 4,
dans lequel le brouillage des données comprend le brouillage d'au moins l'une parmi :
une séquence de contrôle de redondance cyclique, CRC, des données ;
une tête de commande d'accès au support, MAC, des données ; et
une partie ou l'intégralité des données.

6. Procédé (200) selon la revendication 2 ou 3, dans lequel la région de ressources inclut une pluralité de sous-régions, et dans lequel la transmission des données sur la région de ressources comprend :
la sélection d'un ensemble de sous-régions parmi les sous-régions, l'ensemble de sous-régions incluant une ou plusieurs des sous-régions ;
la détermination, parmi les ensembles de ressources candidates, d'un ensemble de ressources cible pour l'ensemble de sous-régions ; et
la transmission, au premier dispositif terminal, des données sur l'ensemble de sous-régions en utilisant l'ensemble de ressources cible.

7. Procédé (200) selon la revendication 1, dans lequel le procédé comprend en outre une ou plusieurs parmi ce qui suit :
- la transmission, au premier dispositif terminal, des données dupliquées sur des sous-régions de la région de ressources ;
- la transmission, au premier dispositif terminal, d'une indication indiquant si la détection aveugle des données transmises sur la région de ressources sur la base des DCI a besoin ou non d'être réalisée ;
- la région de ressources allouée au premier dispositif terminal est discontinue dans un domaine de temps, un domaine de fréquence ou à la fois les domaines de temps et de fréquence ;
- la région de ressources allouée au premier dispositif terminal est séparée de, partiellement chevauchée par ou entièrement chevauchée par une région de ressources allouée à un deuxième dispositif terminal.

8. Procédé (700) mis en oeuvre au niveau d'un premier dispositif terminal (102, 103), comprenant :
la réception (710) d'informations de commande de liaison descendante, DCI, associées à une région de ressources depuis un dispositif de réseau (101), les DCI incluant une pluralité d'ensembles de ressources candidates pour une transmission de données au premier dispositif terminal ;
la réception d'une indication d'un sous-ensemble de la pluralité de ressources candidates, dans lequel la réception de l'indication comprend :
- la réception d'autres DCI associées à la région de ressources, les DCI indiquant un sous-ensemble de la pluralité d'ensembles de ressources candidates pour la transmission de données au premier dispositif terminal ; et
la réalisation d'une détection aveugle de données transmises sur la région de ressources sur la base des DCI, dans lequel ladite réalisation comprend :
- la réalisation (720) d'une détection aveugle des données transmises sur la région de ressources sur la base des autres DCI.

9. Procédé (700) selon la revendication 8, dans lequel la réception de DCI comprend :
la réception des DCI via une signalisation de commande de ressources radio, RRC, une signalisation de commande d'accès au support, MAC, ou une signalisation de couche physique, PHY.

10. Procédé (700) selon la revendication 8, comprenant en outre :
en réponse à la réception d'une indication d'un ensemble de ressources cible depuis le dispositif de réseau (101), la réalisation de la détection aveugle des données sur la région de ressources en utilisant l'ensemble de ressources cible.

11. Procédé (700) selon la revendication 8, dans lequel la réalisation de la détection aveugle des données transmises sur la région de ressources comprend l'un parmi ce qui suit :
- le désembrouillage des données avec des informations d'identification du premier dispositif terminal ;
- la réalisation de la détection aveugle des données sur des sous-régions de la région de ressources ; et, en réponse au fait que les données détectées sont dupliquées, la combinaison des données détectées ;
- la réception d'une indication indiquant si la détection aveugle des données transmises sur la région de ressources sur la base des DCI a besoin ou non d'être réalisée ; et, en réponse au fait que l'indication indique que la détection aveugle des données transmises sur la région de ressources sur la base des DCI a besoin d'être réalisée, la réalisation de la détection aveugle des données transmises sur la région de ressources sur la base des DCI.

12. Procédé (700) selon la revendication 8, dans lequel la région de ressources inclut une pluralité de sous-régions, et dans lequel la réalisation de la détection aveugle des données transmises sur la région de ressources comprend :
la réalisation de la détection aveugle des données sur les sous-régions de la région de ressources.

13. Support lisible par ordinateur (1020) sur lequel sont stockées des instructions (1040), les instructions étant aptes à, lorsqu'elles sont exécutées sur au moins un processeur (1010), amener l'au moins un processeur à réaliser le procédé (200, 700) selon l'une quelconque des revendications 1 à 12.

14. Dispositif de réseau (101, 1000), comprenant :
un processeur (1010) ; et
une mémoire (1020) couplée au processeur et stockant des instructions dans celle-ci, les instructions étant aptes à, lorsqu'elles sont exécutées par le processeur, amener le dispositif de réseau (101, 1000) au moins à réaliser le procédé selon l'une quelconque des revendications 1 à 7.

15. Dispositif terminal (102, 103, 1000), comprenant :
un processeur (1010) ; et
une mémoire (1020) couplée au processeur et stockant des instructions dans celle-ci, les instructions étant aptes à, lorsqu'elles sont exécutées par le processeur, amener le dispositif terminal (102, 103, 1000) au moins à réaliser le procédé selon l'une quelconque des revendications 8 à 12.
